# EUROPÄISCHE PATENTANMELDUNG

(11) **EP 1 491 280 A1**
(43) Veröffentlichungstag der Anmeldung: **29.12.2004**
(21) Anmeldenummer: 03014250.9
(22) Anmeldetag: 25.06.2003
(51) Int. Cl.: B23K 26/14, B23K 26/06, H01S 3/00

(54) **Laserkopf einer Laserstrahlbearbeitungsmaschine mit Wechseldüsen**

(71) Anmelder: Diem, Reinhard, 71083 Herrenberg (DE)
(72) Erfinder: Diem, Reinhard, 71083 Herrenberg (DE)
(74) Vertreter: Klocke, Peter, Dipl.-Ing.

(57) **Zusammenfassung**

Laserkopf einer Laserstrahlbearbeitungsmaschine mit Wechseldüsen Laserkopf (18) in einer Laserstrahlbearbeitungsmaschine mit einem Gehäuse (16), in dessen Inneren eine Strahlkammer (14) und am Ende eine Düse (13) für den Austritt des Laserstrahls (11) und eines Arbeitsgases angeordnet ist. An dem Gehäuse (16) befindet sich ein kalottenförmiger Düsenkopf (8), der an der Innenseite angeordnete Wechseldüsen (13) aufweist, die um eine Drehachse (10) drehbar gehalten und in den Strahlengang des Laserstrahls (11) einbringbar sind. Die Drehachse (10) selbst ist auf einer Exzenterscheibe (15), um beim Wechseln des Düsenkopfs (8) eine einmalige Justierung vornehmen zu können. Ein Wechsel der Düsen (13) auf der Düsenscheibe (5) kann ohne zusätzliche Justierung und damit auch automatisch erfolgen. Ein aufwendiges Justieren und Herumhantieren bei einem Düsenwechsel ist damit nicht mehr notwendig.

## Beschreibung

Die vorliegende Erfindung betrifft einen Laserkopf in einer Laserstrahlbearbeitungsmaschine mit einem Gehäuse, in dessen Inneren eine Strahlkammer und am Ende eine Düse für den Austritt des Laserstrahls und eines Arbeitsgases angeordnet ist.

Derartige Laserköpfe sind allgemein bekannt und werden insbesondere im Zusammenhang mit Laserschweißen auch als Schweißköpfe bezeichnet. Grundsätzlich erfolgt der Einsatz derartiger Laserköpfe jedoch nicht nur beim Schweißen sondern auch beim Trennen von Werkstoffen.

Die Laserköpfe (Schweißköpfe) weisen im Prinzip einen Hohlspiegel oder eine Linse auf, die die Laserstrahlung fokusiert. Der zusammenlaufende Strahl wird durch eine Strahlkammer innerhalb eines Gehäuses geführt, die mit einer Düse abgeschlossen ist. Durch diese Düse tritt der Strahl aus und wird auf die Bearbeitungsstelle fokusiert. Die bekannten Laserköpfe weisen in der Regel außerdem zusätzliche Bohrungen auf, durch die ein Arbeitsgas entweder koaxial in die Strahlkammer eingebracht oder über zusätzliche Bohrungen durch eine separate Düse von der Außenseite des Laserkopfes zugeführt wird.

Bei Änderungen der Einstellungen des Laserkopfes aufgrund beispielsweise unterschiedlicher Materialien oder Materialstärken muss zum Zwecke der Fokusierung einerseits die Optik eingestellt, andererseits aber auch die Düse gewechselt werden. Außerdem kann auch während der Bearbeitung leicht eine Verschmutzung der sehr feinen Düse durch Materialspritzer erfolgen, so dass aus diesem Grund ein Düsenwechsel notwendig ist.

Um bei geänderten Einstellungen trotzdem durch die schmale Düse zu treffen und die Düse nicht wechseln zu müssen, werden bei verschiedenen Einrichtungen die Fokusierlinsen waagrecht verschoben. Dies produziert aber Fehler in der Fokusierung, weil die Linse nicht mehr mittig durchleuchtet wird. Deshalb ist der Fokus nicht optimal, was beim Lasertrennen zu schlechteren Schneidergebnissen führt. Zudem führt die unmittige Durchleuchtung zu Spannungen in der Linse, wodurch die Wärmeverteilung und somit der Brechungsindex sich unterschiedlich an den Rändern der Linse ändert. Dies führt wiederum zu einer weiteren Verschlechterung des Fokus.

Aus der JP 64 07 1590 ist hierzu bekannt, eine Linsenscheibe zu verwenden, die mehrere Linsen aufweist, die um eine Achse drehbar in den Strahlgang gedreht werden können. Damit kann der Wechsel der Linsen zwar schnell erreicht werden, jedoch ist es nach wie vor erforderlich, die für den jeweiligen Anwendungsfall zweckmäßigste Düse anzubringen.

In der Praxis wird daher manuell die Düse abgeschraubt und eine neue Düse an dem Gehäuse des Schweißkopfes befestigt. Dies erfordert relativ viel Zeit und stört den automatischen Ablauf.

Aus der JP 62 25 4993 ist ein automatischer Düsenaustauscher bekannt, der ein Düsenmagazin aufweist. Dieses Düsenmagazin hat die Form einer vertikal angeordneten Scheibe und einer Vielzahl von darauf angeordneten Düsen. Die für den nächsten Bearbeitungsschritt erforderliche Düse wird auf der Scheibe durch Drehung des Magazins ausgewählt und über einen Wechselarm ausgetauscht.

In der JP 06 02 3580 wird eine ähnliche Einrichtung zum Austauschen von Düsen beschrieben, bei der der Laserkopf durch X-Y Bewegung zu einem Düsenaustauschteil fährt, welches eine Vielzahl von verschiedenen Düsen trägt und sich dreht.

Alle diese vorgeschlagenen Lösungen können jedoch in der Anwendung nicht befriedigen und benötigen für den Wechsel der Düsen einen erheblichen apparativen Aufwand mit zusätzlichen Wechselarmen, sowie eine Neujustierung nach jedem Düsenwechsel.

Der vorliegenden Erfindung liegt daher die Aufgabe zugrunde, eine weitere Möglichkeit des Düsenwechsels vorzuschlagen.

Diese Aufgabe wird erfindungsgemäß durch einen Laserkopf mit den Merkmalen des Anspruchs 1 gelöst. Weitere vorteilhafte Ausgestaltungen sind den Unteransprüchen zu entnehmen.

Gemäß der Erfindung befindet sich an dem Gehäuse ein kalottenförmiger Düsenkopf. Die Kalotte kann dabei auch die Form einer Halbkugel aufweisen, die sich an das Gehäuse des Laserkopfes anschließt und an dieses angepasst ist. Auf der Innenseite des Düsenkopfes sind Wechseldüsen vorgesehen, die um eine Drehachse drehbar an dem Düsenkopf gehalten und in den Strahlgang des Laserstrahls einbringbar sind. Damit kann bei einem Düsenwechsel die jeweils für den nächsten Verfahrensschritt erforderliche Düse in den Strahlengang gedreht werden, ohne dass ein aufwendiges weiteres Justieren und Herumhantieren an dem Düsenkopf notwendig ist. Dieser Aufbau ermöglicht auch dann die automatische Einbringung einer Düse, so dass die Rüstzeit erheblich reduziert, und die Zeitspanne eines mannlosen Betriebes erheblich verlängert wird.

Gemäß einer bevorzugten Ausbildung sind die Düsen auf einer Düsenscheibe angeordnet, wobei die Düsenöffnungen auf dem gleichen Radius zur Drehachse angeordnet sind. Zusätzlich kann vorzugsweise außen an der Düsenscheibe ein Zahnkranz vorgesehen sein, um die Düsenscheiben mittels eines Stellmotores verstellen zu können.

Um die gewünschte Genauigkeit bei der Einstellung der Düse zu erreichen, ist die Form der Düsenscheibe an die Form des kalottenförmigen Düsenkopfes angepasst und liegt flächig an der Innenseite des Düsenkopfes mit gleichem Krümmungsradius an.

Der Düsenkopf in dieser Ausgestaltung, beispielsweise als stabile Halbkugel, schützt die Düsenscheibe bzw. die Düsen vor Beschädigungen, die bisher durch die exponierten Düsen immer zuerst Opfer von Kollisionen mit dem Schneidgut waren.

Zum Wechseln der Düsen muss der Düsenkopf von dem Gehäuse abgenommen und wieder aufgesetzt werden. Hierzu kann beispielsweise ein entsprechendes Feingewinde oder auch ein Schnappverschluss vorgesehen sein. Unabhängig davon ist jedoch bei jedem Wechsel des Düsenkopfes eine neue Justierung der Düsen auf den Laserstrahl erforderlich, da bei derart geringen Abmessungen bei jedem Wechsel des Düsenkopfes mit Veränderungen zu rechnen ist. Daher wird gemäß einer weiteren vorteilhaften Ausbildung eine Exzenterscheibe in der Wand des Düsenkopfes vorgesehen, die um eine Achse drehbar ist und exzentrisch zu dieser Achse die Drehachse der Düsenscheibe trägt. Durch Drehen dieser Exzenterscheibe (x-Achse) und durch Drehung der Düsenscheibe (y-Achse) kann nach dem Wechsel des Düsenkopfes eine Düse der Düsenscheibe mit dem Düsenmittelpunkt exakt zum Laserstrahl in eine Achse gebracht werden. Dabei wird zuerst die Düsenöffnung durch Drehen der Exzenterscheibe auf die Kreislinie gebracht, auf der sich die Mittelpunkte der übrigen Düsenöffnungen befinden. Der seitliche Versatz und damit die entgültige Deckung wird dann durch Verdrehen der Düsenscheibe erreicht. Damit kann diese Stellung als Nullpunkt für den automatischen Düsenwechsel festgelegt werden. Bei der nachfolgenden Drehung der Düsenscheibe für den Wechsel der Düsen ist eine weitere Einstellung nicht erforderlich, da dann alle Düsen auf der Düsenscheibe zu dem Laserstrahl exakt ausgerichtet sind.

Gemäß einer weiteren Ausbildung des Laserkopfes ist die Kalottenöffnung für den Durchtritt des Laserstrahls größer als der Düsendurchmesser. Dadurch wird die Düsenscheibe durch den Überdruck in dem Innenraum zwischen dem Düsenkopf und dem Gehäuse von innen an die Wand des Düsenkopfes gedrückt und dichtet sich selbst ab.

Die in dem Gehäuse vorgesehenen Einlasskanäle für das Arbeitsgas sind gemäß einer bevorzugten Ausbildung versetzt zur Längsachse des Strahlraumes angeordnet. Damit wird erreicht, dass eine kontrollierte Verwirbelung des eingeblasenen Arbeitsgases erfolgt.

Um in dem von dem Düsenkopf gebildeten Raum im Anschluss an das Gehäuse unkontrollierte Verwirbelungen in dem sonst ungleichförmigen Raum zu verhindern, weist das Gehäuse einen Mündungstrichter auf, der mit einer sehr geringen Distanz vor der Düsenscheibe endet.

Mit dem erfindungsgemäß ausgestalteten Laserkopf und insbesondere dem Düsenkopf kann somit nach der einmaligen Justierung einer Düse ein automatisches Wechseln verschiedener Düsengrößen durchgeführt werden. Erst beim erneuten Anbringen des Düsenkopfes an das Gehäuse muss einmalig eine grundsätzliche Justierung erfolgen. Hierzu wird die ebenfalls kugelkappenförmige Exzenterscheibe, die die Drehachse für die Düsenscheibe trägt nach dem Anbringen des Düsenkopfes entsprechend verdreht. Dies kann beispielsweise von außen durch eine entsprechende Stellschraube erfolgen.

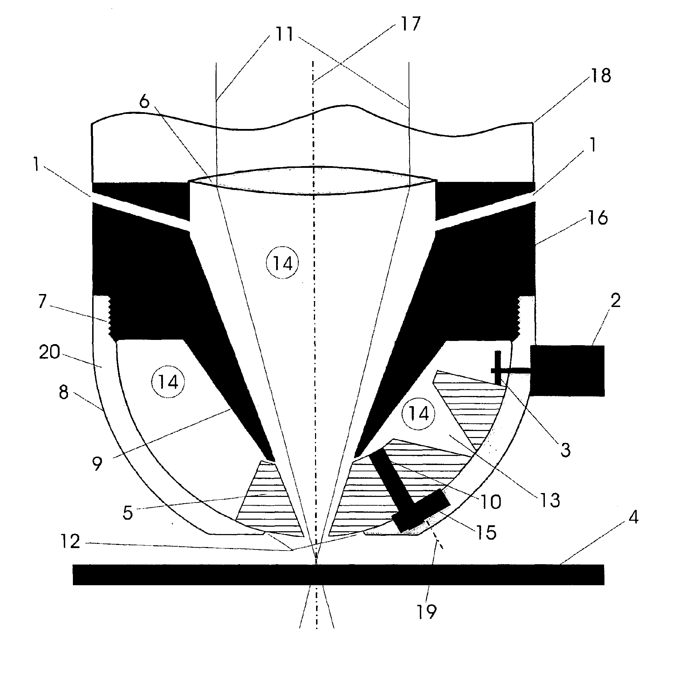

Nachfolgend wird die Erfindung anhand der einzigen Figur näher erläutert. Die Figur zeigt in einer Schnittdarstellung das düsenseitige Ende eines Laserkopfes 18 mit dem Gehäuse 16 und einem an dem Gehäuse angeschraubten halbkugelförmigen Düsenkopf 8. In bekannter Art und Weise gelangt der Laserstrahl 11 auf eine Linse 6 und wird von dort durch den kegelförmigen Strahlraum 14 symmetrisch zur Längsachse 17 auf das Gut 4 fokusiert. Die in den Strahlraum 14 einmündenden Strömungskanäle 1 sind für das Einblasen des Arbeitsgases so angeordnet, dass ihre Achsen die Längsachse 17 nicht schneiden.

Der Düsenkopf 8 ist über ein Schraubengewinde 7 an dem Gehäuse 16 befestigt. Am unteren Ende weist der Düsenkopf eine Öffnung 12 auf, die durch eine Düsenscheibe 5 verschlossen wird, die wiederum eine Vielzahl von verschiedenen Düsen 13 aufweist. Die Öffnung 12 ist wesentlich größer als die Öffnung einer Düse 13. In der Wand 20 des Düsenkopfes 8 befindet sich eine vorzugsweise kugelkappenförmige Exzenterscheibe 15, die um eine Achse 19 drehbar gelagert ist und versetzt zum Mittelpunkt der Exzenterscheibe 15 die Drehachse 10 für die Düsenscheibe 5 aufweist. Die Düsenscheibe 5 ist in ihrer Krümmung an die Krümmung des Düsenkopfes 8 angepasst und weist in dem Ausführungsbeispiel einen Zahnkranz auf, in den das Antriebsrad 3 eines Stellmotors 2 eingreift. Über den Stellmotor 2 kann dann die für den nächsten Prozessschritt benötigte Düse in den Laserstrahl 11 gebracht werden.

## Patentansprüche

1. Laserkopf in einer Laserstrahlbearbeitungsmaschine mit einem Gehäuse (16), in dessen inneren eine Strahlkammer (14) und am Ende eine Düse (13) für den Austritt des Laserstrahls (11) und eines Arbeitsgases angeordnet ist, **dadurch gekennzeichnet, dass** sich an dem Gehäuse (16) ein kalottenförmiger Düsenkopf (8) befindet, der an der Innenseite angeordnete Wechseldüsen (5, 13) aufweist, die um eine Drehachse (10) drehbar gehalten und in den Strahlengang des Laserstrahls (11) einbringbar sind.

2. Laserkopf nach Anspruch 1, **dadurch gekennzeichnet, dass** die Düsen (13) auf einer Düsenscheibe (5) mit der Düsenöffnung auf gleichem Radius zur Drehachse (10) angeordnet sind.

3. Laserkopf nach Anspruch 2, **dadurch gekennzeichnet, dass** die Düsenscheibe (5) auf der der Innenseite des Düsenkopfes (8) zugewandten Seite entsprechend der Krümmung des Düsenkopfes geformt ist.

4. Laserkopf nach Anspruch 3, **dadurch gekennzeichnet, dass** die Drehachse (10) der Düsenscheibe (5) auf einer in der Wand (20) des Düsenkopfes (8) um eine Achse (19) drehbar angeordneten Exzenterscheibe (15) exzentrisch zu der Achse (19) der Exzenterscheibe (15) angeordnet ist.

5. Laserkopf nach einem der vorangegangenen Ansprüche 2 bis 4, **dadurch gekennzeichnet, dass** die Düsenscheibe (5) über einen Stellmotor (2) verstellbar ist.

6. Laserkopf nach einem der vorangegangenen Ansprüche, **dadurch gekennzeichnet, dass** die Kalottenöffnung (12) für den Durchtritt des Laserstrahls (11) größer als der Düsendurchmesser ist.

7. Laserkopf nach einem der vorangegangenen Ansprüche, **dadurch gekennzeichnet, dass** die Einlasskanäle (1) in dem Gehäuse (16) für das Arbeitsgas derart in die Strahlkammer (14) münden, dass die Achsen der Einlasskanäle (1) die Längsachse (17) der Strahlkammer (14) nicht schneiden.

8. Laserkopf nach einem der vorangegangenen Ansprüche, **dadurch gekennzeichnet, dass** das Gehäuse (16) einen Mündungstrichter (9) aufweist, in dessen Inneren sich die spitz zulaufende kegelförmige Strahlkammer (14) befindet und von dem kalottenförmigen Düsenkopf (8) umgeben ist.

9. Laserkopf nach einem der vorangegangenen Ansprüche, **dadurch gekennzeichnet, dass** der Düsenkopf (8) auf das Gehäuse (16) aufschraubbar ist.
